(19) Europäisches Patentamt
European Patent Office
Office européen des brevets

(11) **EP 3 027 579 B1**

(12) **EUROPÄISCHE PATENTSCHRIFT**

(45) Veröffentlichungstag und Bekanntmachung des Hinweises auf die Patenterteilung:
**17.10.2018 Patentblatt 2018/42**

(21) Anmeldenummer: **14744863.3**

(22) Anmeldetag: **31.07.2014**

(51) Int Cl.:
**C04B 35/48** *(2006.01)*     **C04B 35/56** *(2006.01)*
**C22C 29/08** *(2006.01)*

(86) Internationale Anmeldenummer:
**PCT/EP2014/066476**

(87) Internationale Veröffentlichungsnummer:
**WO 2015/014930 (05.02.2015 Gazette 2015/05)**

(54) **GESINTERTE KUGEL**

SINTERED BALL

SPHÈRE FRITTÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2013 US 201361860636 P**

(43) Veröffentlichungstag der Anmeldung:
**08.06.2016 Patentblatt 2016/23**

(73) Patentinhaber: **Sigmund Lindner GmbH**
**95485 Warmensteinach (DE)**

(72) Erfinder:
• **MUELLER, Achim**
**95497 Goldkronach (DE)**
• **SCHEIDT, Karin**
**95028 Hof (DE)**
• **PEUKERT, Fabian**
**95686 Fichtelberg (DE)**

(74) Vertreter: **Isarpatent**
**Patent- und Rechtsanwälte Behnisch Barth Charles**
**Hassa Peckmann & Partner mbB**
**Friedrichstrasse 31**
**80801 München (DE)**

(56) Entgegenhaltungen:
DE-A1-102011 113 854

• IRINA HUSSAINOVA ET AL: "Erosive wear of advanced composites based on WC", TRIBOLOGY INTERNATIONAL, BUTTERWORTH SCIENTIFIC LDT, GUILDFORD, GB, Bd. 46, Nr. 1, 8. Juni 2011 (2011-06-08), Seiten 254-260, XP028125239, ISSN: 0301-679X, DOI: 10.1016/J.TRIBOINT.2011.06.004 [gefunden am 2011-06-18]
• MALEK O ET AL: "Processing of ultrafine ZrO2 toughened WC composites", JOURNAL OF THE EUROPEAN CERAMIC SOCIETY, ELSEVIER SCIENCE PUBLISHERS, BARKING, ESSEX, GB, Bd. 29, Nr. 16, 15. Dezember 2009 (2009-12-15), Seiten 3371-3378, XP026601876, ISSN: 0955-2219, DOI: 10.1016/J.JEURCERAMSOC.2009.07.013 [gefunden am 2009-08-08]
• JIANG ET AL: "ZrO"2-WC nanocomposites with superior properties", JOURNAL OF THE EUROPEAN CERAMIC SOCI, ELSEVIER SCIENCE PUBLISHERS, BARKING, ESSEX, GB, vol. 27, no. 2-3, 19 November 2006 (2006-11-19), pages 1247-1251, XP005729738, ISSN: 0955-2219, DOI: 10.1016/J.JEURCERAMSOC.2006.05.028
• ANNE G ET AL: "Hard, tough and strong ZrO2-WC composites from nanosized powders", JOURNAL OF THE EUROPEAN CERAMIC SOCIETY, ELSEVIER SCIENCE PUBLISHERS, BARKING, ESSEX, GB, vol. 25, no. 1, 1 January 2005 (2005-01-01), pages 55-63, XP027618182, ISSN: 0955-2219 [retrieved on 2005-01-01]

**Beschreibung**

Die vorliegende Erfindung betrifft gesinterte Kugeln umfassend Wolframcarbid (WC) und teilstabilisiertes Zirkonoxid, $nX:ZrO_2$, sowie Pulvermischungen und Grünkörper zu deren Herstellung, sowie Verfahren zur Herstellung der Grünkörper und der gesinterten Kugeln.

Hintergrund der Erfindung

Die Nassmahltechnik stellt eine der Schlüsseltechnologien zur gezielten Einstellung von Werkstoffeigenschaften für die Farben- und Lackindustrie bis hin zur Lebensmittel- und Pharmaindustrie dar. Keramische Mahlkugeln werden in Rührwerkskugelmühlen zur Nassvermahlung von vielfältigen Materialien, wie z.B. Pigmenten, und zur Dispergierung von Formulierungen eingesetzt. Durch den Einsatz keramischer Mahlkugeln wurde bereits ein wesentlicher Fortschritt im Bereich der Effizienz und Kontaminationsgefahr solcher Prozesse erzielt. Im Zuge der Bestrebungen hin zu effizienteren Prozessen und Mahlfeinheiten im Nanometermaßstab spielen beim Nassmahlprozess die Materialdichte und damit der erzielbare Energieeintrag im Mahlprozess eine wesentliche Rolle. Derzeit auf dem Markt befindliche Mahlkugeln auf Basis von Oxidkeramiken haben eine gute Verschleißfestigkeit, allerdings liegt die maximale Dichte von kommerziell erhältlichen Mahlkugeln, beispielsweise der Firmen Compagnie de Saint Gobain (www.zirpro.com), Jyoti Ceramic Industries Pvt. Ltd. (www.jyoticeramic.com) oder Zircoa Inc. (www.zircoa.com), bei weniger als 6,3 g/cm$^3$ (Stand 2013).

Die DE 10 2011 113854 A1 offenbart Hartstoffpulver, umfassend zumindest eine Fraktion von Körnern, wobei die Körner Kristallite aus einem Hartstoff umfassen, und wobei die Kristallite in einem der Körner jeweils miteinander versintert sind, wobei für eine Mehrzahl der Körner ein mittlerer Durchmesser der Körner wenigstens dem Fünffachen einer mittleren Sehnenlänge der Kristallite des jeweiligen Korns beträgt, wobei die Körner im Wesentlichen kugelförmig ausgebildet sind.

I. Hussainova et al., Erosive wear of advanced composited based on WC, Tribology International, 46, 1, 2011, S. 254-260 betrifft Cermete auf WC-Basis, welche mit Yttriumoxid stabilisiert und Zirkoniumoxid dotiert sind, mit verschiedenen Metallbindern (Co, Ni oder Fe).

In Jiang et al. "ZrO"2-WC nanocomposites with superior properties, Journal of the European Ceramic Society, 27, 2-3, 2006, S. 1247-1251 werden vollständig dichte ZrO2-basierte Nanokompsite mit 5-40 Col.% WC, die durch Heißpressen bei 1450°C für 1 h hergestellt werden, diskutiert.

Anne G. et al., Hard, tough and strong ZrO2-WC composites from nanosized powders, Journal of the European Ceramic Society, 25, 1, 2005, S. 55-63 beschreibt Yttriumoxid-stabilisierte Zirkoniumoxid (Y-TZP)-basierte Komposite mit einem Gehalt an Wolframcarbid von bis zu 50 Vol.% sowie deren Herstellung aus Nanopulvern durch Heißpressen.

Es ist somit Aufgabe der Erfindung, gesinterte Kugeln mit erhöhter Dichte, hoher Verschleißfestigkeit und langer Haltbarkeit bereitzustellen.

Diese Aufgabe wird gelöst durch eine gesinterte Kugel, umfassend Wolframcarbid, WC, und teilstabilisiertes Zirkonoxid, $nX:ZrO_2$, bei der der Anteil an WC in der Werkstoffzusammensetzung 1 bis 60 Vol.%, und der Anteil an $nX:ZrO_2$ 99 bis 40 Vol.% beträgt, basierend auf 100 Vol.% WC und $nX:ZrO_2$.

Weiterhin wird eine Pulvermischung und ein daraus erhältlichen Grünkörper beschrieben, und die Erfindung stellt einen Grünkörper umfassend eine Pulvermischung, die durch ein Sprühtrocknungsverfahren oder ein Gefriertrocknungsverfahren oder ein Gefriergranulierungsverfahren oder ein Dispergierungsverfahren, bevorzugt in einer Rührwerkskugelmühle, aus einer Werkstoffzusammensetzung umfassend Wolframcarbid, WC, und teilstabilisiertes Zirkonoxid, $nX:ZrO_2$ hergestellt wird, bei der der Anteil an WC in der Werkstoffzusammensetzung 1 bis 60 Vol.%, und der Anteil an $nX:ZrO_2$ 99 bis 40 Vol.% beträgt, basierend auf 100 Vol.% WC und $nX:ZrO_2$, und der in Form einer Kugel mit einem Breiten- zu Längenverhältnis ($b/l_3$) zwischen 0,90 und 0,99, bevorzugt zwischen 0,93 und 0,98 vorliegt, ein Verfahren zur Herstellung eines solchen Grünkörpers, bei dem die Pulvermischung mit entionisiertem Wasser bis zum Erreichen eines Feststoffgehalts zwischen 40 bis 80 Gew.% und mit 0 bis 1,5 Gew.% Bindemittel und 0 bis 1,5 Gew.% eines Hilfsstoffes gemischt wird und anschließend über ein Vertropfungsverfahren zu einem Grünkörper verarbeitet wird, und ein Verfahren zur Herstellung der gesinterten Kugel, bei dem der Grünkörper bei Temperaturen zwischen 1200 bis 1800°C unter einer Schutzgasatmosphäre, bestehend aus Helium, Argon oder Stickstoff oder Mischungen davon, oder unter Vakuum oder unter einer reduzierenden Atmosphäre, oder unter Gasdruck, und unter einem Druck zwischen 0,1 und 1,5 MPa, und gegebenenfalls mit einem Sinterhilfsmittel, gesintert wird, bereit.

Weitere bevorzugte Ausführungsformen finden sich in den abhängigen Ansprüchen.

Der Erfindung liegt die Idee zugrunde, ein Verfahren zur Herstellung von Mahlkugeln der Zusammensetzung xVol.%-WC-yVol.%-$nX:ZrO_2$ zu schaffen, die nach ihrer Herstellung Materialdichten größer oder gleich 6,3 g/cm$^3$, hohe Verschleißfestigkeit und lange Haltbarkeit aufweisen.

Die Basis der Erfindung bilden Werkstoffzusammensetzungen umfassend metallischen Hartstoff, namentlich Wolframcarbid WC, und eine Oxidkeramik, namentlich teilstabilisiertes Zirkonoxid bzw. Zirkonium(IV)-oxid $nX:ZrO_2$, nachstehend auch vereinfacht Zirkonoxid genannt, durch die höhere Mahlkörperdichten erreicht werden, womit höhere Energieeinträge bei Mahlprozessen bzw. effiziente Mahlfeinheiten im Nanometermaßstab erzielt werden. Solche Werkstoffzusammensetzungen sind zwar schon bekannt, etwa aus D. Jiang et al., ZrO2-WC nanocomposites with superior properties, J Eur. Cer. Soc. 27 (2007), 1247-1251, jedoch ist es bisher nicht gelungen, diese zu Mahlkörperkugeln zu verarbeiten.

Beschreibung der Figuren

Die Erfindung wird nunmehr im Detail mit Bezug auf die beigefügten Figuren erläutert, wobei diese die Erfindung jedoch nicht einschränken.

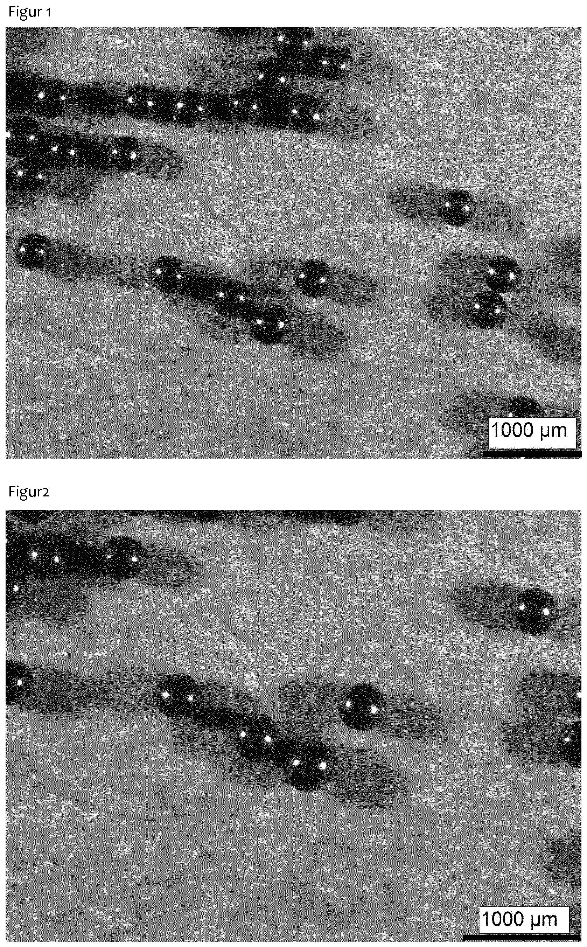

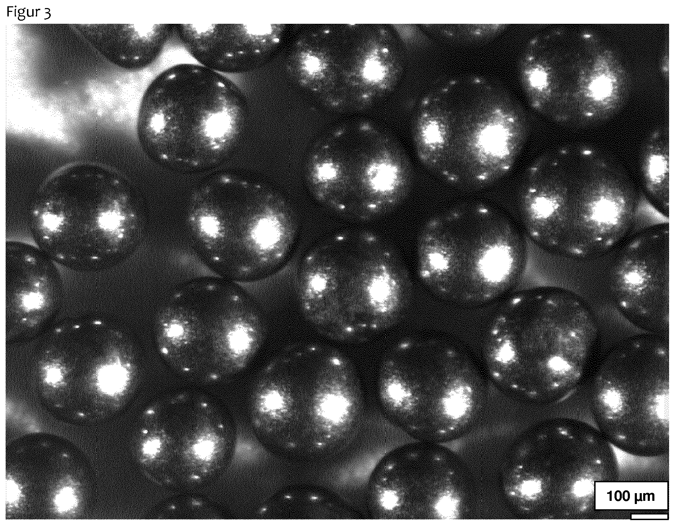

Figuren 1, 2 und 3 zeigen hierbei beispielhafte lichtmikroskopische Aufnahmen von gesinterten Kugeln gemäß einer Ausführungsform der vorliegenden Erfindung.

Detaillierte Beschreibung der Erfindung.

Definitionen

Kugeln sind im Rahmen der Erfindung runde dreidimensionale Körper, bei denen ein Breiten- zu Längenverhältnis ($b/l_3$, welches einen gewogenen Mittelwert einer ausgewählten Kenngröße, errechnet über einen gerätespezifischen Algorithmus des Retsch Camsizers® darstellt) zwischen 0,90 und 1,0 vorliegt. Hierbei ist $b/l_3$ der Quotient aus min (xc) / max (xFe) für Werte min (xc) und max (xFe) einer gemessenen Anzahl (=3) von xc und xFe Werten.

min (xc) ist hierbei die kürzeste aller gemessenen maximalen Sehnen einer Partikelprojektion. max (xFe) ist der Abstand zweier Tangenten, die senkrecht zur Messrichtung an das Partikel angelegt wurden; max: bedeutet hierbei den größten Feret-Durchmesser eines Partikels, ermittelt aus verschiedenen Messrichtungen, über alle Richtungen gemittelt.

Im Rahmen der Erfindung beziehen sich alle Mengenangaben, soweit nicht anderweitig angegeben, auf die Einheit Gew.%.

In der Formel $nX:ZrO_2$ steht das "n" für den molaren Anteil des stabilisierenden Agens, und X steht für die das Zirkonoxid stabilisierende Verbindung. Hierbei ist nicht ausgeschlossen, dass ein oder mehrere Verbindungen zur Stabilisierung des Zirkonoxids verwendet werden können.

Entionisiertes Wasser ist im Rahmen der Erfindung Wasser, welchem durch ein Verfahren wie beispielsweise Ionenaustausch oder Umkehrosmose Ionen entzogen worden sind, so dass es Ionen mit einer geringeren Konzentration aufweist als Leitungswasser.

Eine erfindungsgemäße gesinterte Kugel umfasst Wolframcarbid (WC) und teilstabilisiertes Zirkonoxid, $nX:ZrO_2$, bei der der Anteil an WC in der Werkstoffzusammensetzung 1 bis 60 Vol.%, und der Anteil an $nX:ZrO_2$ 99 bis 40 Vol.% beträgt, basierend auf 100 Vol.% WC und $nX:ZrO_2$.

Als Metalloxid X eignen sich im teilstabilisierten Zirkonoxid in der gesinterten Kugel bevorzugt Seltenerdoxide, Calciumoxid und Magnesiumoxid, weiter bevorzugt Oxide von Yttrium, Cerium, Magnesium, Calcium und/oder Scandium, insbesondere bevorzugt $Y_2O_3$, $CeO_2$, $MgO$, $CaO$ und oder $Sc_2O_3$ zur Teilstabilisierung, wobei auch mehrere Metalloxide in Verbindung verwendet werden können, beispielsweise auch $Y_2O_3$ und $Nd_2O_3$ oder $Y_2O_3$ und $CeO_2$. Der Gewichtsanteil an X in $nX:ZrO_2$, berechnet aus dem Molanteil n mit Hilfe der molaren Masse der jeweiligen Verbindung, kann 2 bis 25,0 Gew.%, bevorzugt 3 bis 20 Gew.%, weiter bevorzugt 5,0 bis 5,6 Gew.% betragen, basierend auf 100 Gew.% $nX:ZrO_2$. Für bestimmte Metalloxide können verschiedene Gewichtsanteile vorgesehen sein. So ist beispielsweise für $CeO_2$ ein möglicher bevorzugter Anteil 3 bis 25,0 Gew.%, wohingegen dieser für $Y_2O_3$ bei 4,5 bis 6,0 Gew.%, bevorzugt 5,0 bis 5,5 Gew.% liegen kann. In bestimmten Ausführungsformen ist das erfindungsgemäß verwendete Zirkonoxid mit $Y_2O_3$ teilstabilisiert. Der Gehalt an $Y_2O_3$ in $ZrO_2$ kann sich von 4,5 bis 6,0 Gew.%, bevorzugt 5,0 bis 5,5 Gew.% erstrecken.

In der gesinterten Kugel kann zudem das Zirkonoxid mit weiteren Elementen M, bevorzugt Oxiden von Aluminium und/oder Eisen, insbesondere bevorzugt mit $Al_2O_3$ und/oder $Fe_2O_3$, vermischt sein. Der Gehalt an weiteren Elementen M, bevorzugt Oxiden von Aluminium und/oder Eisen, insbesondere bevorzugt $Al_2O_3$ und/oder $Fe_2O_3$, kann 0 bis 2 Gew.%, bevorzugt 0,1 bis 1,0 Gew.% betragen, basierend auf 100 Gew.% $nX:ZrO_2$.

In der gesinterten Kugel beträgt der Anteil an WC in der Werkstoffzusammensetzung 1 bis 60 Vol.%, weiter bevorzugt 10 bis 40 Vol.%, und der Anteil an $nX:ZrO_2$ 99 bis 40 Vol.%, weiter bevorzugt 90 bis 60 Vol.% beträgt, basierend auf 100 Vol.% WC und $nX:ZrO_2$.

Weiterhin weist die gesinterte Kugel, bevorzugt hergestellt aus Wolframcarbidpartikeln und teilstabilisierten Zirkonoxidpartikeln, eine mittlere volumetrische Partikelgröße d50 von jeweils 10 bis 1500 nm, bevorzugt 30 bis 500 nm, und eine volumetrische Partikelgröße d95 (Partikelgröße, bei der 95 % der Partikel in einer Mischung kleiner sind) von jeweils 500 bis 3500 nm, bevorzugt 500 bis 3000 nm, weiter bevorzugt 800 bis 1200 nm, auf. Hierbei können die Wolframcarbidpartikel bei der Herstellung mit mindestens einem organischen Additiv, bevorzugt Stearinsäure, als Oxidationsschutz passiviert worden sein.

Die erfindungsgemäße gesinterte Kugel kann einen Durchmesser von 0,05 mm bis 3 mm, bevorzugt von 0,2 mm bis 1,2 mm aufweisen. Die Dichte der gesinterten Kugel reicht bevorzugt von 6,5 bis 10,5 g/cm$^3$, weiter bevorzugt von 6,8 und 9,8 g/cm$^3$. Zudem können für die gesinterte Kugel eine Vickershärte nach DIN EN ISO 6507 zwischen 14,5 und 16,5 GPa, bevorzugt zwischen 14,8 und 16,2 GPa, eine Bruchzähigkeit nach DIN EN 14425-3 wischen 6,5 und 11,0 MPa√m, bevorzugt zwischen 6,9 und 9,4 MPa√m, und eine Biegefestigkeit nach DIN EN 843-1 zwischen 1800 und 2200 MPa, bevorzugt zwischen 1950 und 2050 MPa insbesondere ungefähr 2000 MPa, beobachtet werden.

Zur Herstellung der gesinterten Kugel wird zunächst eine Werkstoffzusammensetzung, umfassend Wolframcarbid (WC) und teilstabilisiertes Zirkonoxid, nX:ZrO$_2$ bereitgestellt. Diese Werkstoffzusammensetzung kann bevorzugt Wolframcarbidpartikel und teilstabilisierte Zirkonoxidpartikel mit einer mittleren volumetrischen Partikelgröße d50 von jeweils 10 bis 2500 nm, bevorzugt 10 bis 1500 nm, weiter bevorzugt 30 bis 1500 nm, und besonders bevorzugt 30 bis 500 nm umfassen, mit denen eine bevorzugte Dichte erzielbar ist. In bestimmten Ausführungsformen erstrecken sich die mittleren volumetrischen Partikelgrößen, d50, von Wolframcarbid und Zirkonoxid, die erfindungsgemäß verarbeitet werden, somit von 10-2500nm, bevorzugt von 10-1500 nm, weiter bevorzugt von 30-1500 nm, und besonders bevorzugt von 30-500 nm. Außerdem erstrecken sich die volumetrischen Partikelgrößen d95 von Wolframcarbid und Zirkonoxid, die erfindungsgemäß verarbeitet werden, von 10 bis 3500 nm, bevorzugt 10 bis 2000 nm, weiter bevorzugt von 40 bis 2000 nm und besonders bevorzugt 40 bis 1200 nm. Die volumetrischen Partikelgrößen d50 und d95 werden hierbei entweder über ein Laserbeugungsmessverfahren nach DIN ISO 13320-1 und/oder ein akustisches Partikelgrößenmessverfahren bestimmt. In der Werkstoffzusammensetzung können die Wolframcarbidpartikel in bevorzugten Ausführungsformen mit organischen Additiven, bevorzugt Stearinsäure, passiviert sein, um sie gegen Oxidation zu schützen.

Als Metalloxid X zur Teilstabilisierung des Zirkonoxid in der Werkstoffzusammensetzung können verschiedene Metalloxide X ausgewählt aus Seltenerdoxiden, Calciumoxid und Magnesiumoxid, bevorzugt Oxiden von Yttrium, Cerium, Magnesium, Calcium und/oder Scandium, insbesondere bevorzugt mit $Y_2O_3$, $CeO_2$, $MgO$, $CaO$ und oder $Sc_2O_3$ verwendet werden. Auch können Kombinationen von stabilisierenden Metalloxiden, wie etwa Yttriumoxid $Y_2O_3$ und Neodymoxid $Nd_2O_3$ oder $Y_2O_3$ und $CeO_2$ verwendet werden. Der Gehalt an X in nX:ZrO$_2$, berechnet aus dem Molanteil n mit Hilfe der molaren Masse der jeweiligen Verbindung, kann bei 3 bis 20,0 Gew.%, bevorzugt 5,0 bis 5,5 Gew.%, liegen, basierend auf 100 Gew.% nX:ZrO$_2$. Für bestimmte Metalloxide können verschiedene Gewichtsanteile vorgesehen sein. So ist beispielsweise für $CeO_2$ ein möglicher bevorzugter Anteil 3 bis 20,0 Gew.%, wohingegen dieser für $Y_2O_3$ bei 4,5 bis 6,0 Gew.%, bevorzugt 5,0 bis 5,5 Gew.% liegen kann.

Darüber hinaus kann das Zirkonoxid in bestimmten Ausführungsformen mit weiteren Elementen M, bevorzugt Oxiden von Aluminium und/oder Eisen, insbesondere bevorzugt mit $Al_2O_3$ und/oder $Fe_2O_3$, vermischt sein. Der Gehalt an weiteren Elementen M, bevorzugt Oxiden von Aluminium und/oder Eisen, insbesondere bevorzugt $Al_2O_3$ und/oder $Fe_2O_3$, kann hierbei bei 0 bis 2 Gew.%, bevorzugt 0,1 bis 1,0 Gew.% liegen, basierend auf 100 Gew.% nX:ZrO$_2$.

Der Anteil an WC in der Werkstoffzusammensetzung kann bei 1 bis 60 Vol.%, weiter bevorzugt 10 bis 40 Vol.%, und der Anteil an nX:ZrO$_2$ bei 99 bis 40 Vol.%, weiter bevorzugt 90 bis 60 Vol.% liegen, basierend auf 100 Vol.% WC und nX:ZrO$_2$. Darüber hinaus kann die Werkstoffzusammensetzung weiterhin Hilfsstoffe wie beispielsweise Dispergierhilfsmittel auf Basis von Carbonsäuren und/oder Aminoalkoholen in einer Gesamtmenge von 0 bis 3 Gew.%, bevorzugt 0,1 bis 1,0 Gew.%, und/oder Binder in einer Menge von 0 bis 3,5 Gew.%, bevorzugt 0,1 bis 1,0 Gew.%, umfassen, basierend auf 100 Gew.% der Werkstoffzusammensetzung. Zusätzlich kann die Werkstoffmischung eine metallische Binderphase, bevorzugt Kobalt, in einer Gesamtmenge von 0 bis 20 Gew.%, bevorzugt 6 bis 10 Gew.%, umfassen. Zudem kann darin entionisiertes Wasser enthalten sein, wobei das Gewichtsverhältnis von Werkstoffzusammensetzung zu Wasser, jeweils in Gramm, bevorzugt 90:10 bis 50:50, weiter bevorzugt 70:30 bis 60:40 beträgt. Die Menge an entionisiertem Wasser, die der Werkstoffzusammensetzung zugesetzt werden kann, kann jedoch geeignet aus der Zugabemenge der Hilfsstoffe und der Menge an Binder bestimmt werden.

Weiterhin können in der Werkstoffzusammensetzung Hilfsstoffe in einer Menge von 0 bis 3 Gew.%, bevorzugt 0,1 bis 1,0 Gew.%, und/oder Binder in einer Menge von 0 bis 3,5 Gew.%, bevorzugt 0,1 bis 1,0 Gew.%, basierend auf 100 Gew.% der Werkstoffzusammensetzung, enthalten sein.

In bestimmten Ausführungsformen kann die Werkstoffzusammensetzung durch Zugabe von unterschiedlichen Hilfsstoffen homogenisiert bzw. stabilisiert und mit Bindern verschiedener Zusammensetzungen versetzt sein, kann also Hilfsstoffe und/oder Binder umfassen. Der Gehalt an Hilfsstoffen in der Werkstoffzusammensetzung kann zwischen 0 bis 3 Gew.%, bevorzugt zwischen 0,5 und 1,5 Gew.% liegen, und der Gehalt an Binder kann zwischen 0 und 3,5 Gew.%, bevorzugt zwischen 1,0 und 2,0 Gew. % liegen, basierend auf 100 Gew.% der Werkstoffzusammensetzung. Insbesondere kann die Werkstoffzusammensetzung mit einem Sinterhilfsmittel, bevorzugt einer Silizium- und/oder Aluminium- und/oder einer Borverbindung wie $B_4C$, versetzt sein.

Aus einer solchen Werkstoffzusammensetzung wird nunmehr in einem ersten Verfahrensschritt eine homogene Pulvermischung hergestellt, wobei eine Herstellung beispielsweise durch ein Sprühtrocknungsverfahren oder ein Gefriertrocknungsverfahren oder ein Gefriergranulierungsverfahren oder ein Dispergierungsverfahren, bevorzugt in einer Rührwerkskugelmühle, erfolgen kann. Hiermit weist die erfindungsgemäß erhaltene Pulvermischung aus dem Verfahrensschritt eine enge Partikelgrößenverteilung mit einer volumenbezogenen Normalverteilung (Gaußverteilung), gemessen mittels Laserbeugungsverfahren und/oder akustischem Partikelgrößenmessverfahren, auf. Somit ist erfindungsgemäß eine Pulvermischung, die durch ein Sprühtrocknungsverfahren oder ein Gefriertrocknungsverfahren oder ein Gefriergranulierungsverfahren oder ein Dispergierungsverfahren, bevorzugt in einer Rührwerkskugelmühle, aus einer Werkstoffzusammensetzung umfassend Wolframcarbid, WC, und teilstabilisiertes Zirkonoxid, $nX:ZrO_2$ hergestellt wird, umfasst. Damit die Pulvermischung aus der Werkstoffzusammensetzung hergestellt werden kann, umfasst die Werkstoffzusammensetzung vor dem Gefriertrocknungsverfahren oder dem Gefriergranulierungsverfahren oder dem Dispergierungsverfahren weiterhin bevorzugt entionisiertes Wasser , wobei das Gewichtsverhältnis von Werkstoffzusammensetzung zu Wasser 90:10 bis 50:50, bevorzugt 70:30 bis 60:40 beträgt. Das Sprühtrocknungsverfahren, Gefriertrocknungsverfahren, Gefriergranulierungsverfahren bzw. Dispergierungsverfahren ist hierbei nicht besonders beschränkt, und die üblicherweise in der Technik verwendeten Verfahren können geeignet angewendet werden. Bevorzugt sind ein Gefriertrocknungsverfahren bzw. eine Nassdispergierung in einem Lösungsmittel wie Wasser, Ethanol oder Isopropanol in einer Rührwerkskugelmühle.

Durch Zugabe von entionisiertem Wasser zur Pulvermischung wird ein sogenannter Schlicker hergestellt. Dieser Schlicker wird dann über ein Vertropfungsverfahren zu einem Grünkörper verarbeitet. Der Feststoffgehalt des Schlicker liegt hierbei bevorzugt zwischen 40 bis 80 Gew.%, weiter bevorzugt zwischen 50 und 70 Gew.%. Zudem können gegebenenfalls 0 bis 1,5 Gew.%, bevorzugt 0 bis 1,0 Gew.% Bindemittel zugegeben, außerdem 0 bis 1,5 Gew%, bevorzugt 0 bis 1,0 Gew% eines Hilfsstoffes, und die Mischung im Anschluss gemischt werden, wobei danach über ein Vertropfungsverfahren die Verarbeitung zum Grünkörper stattfinden kann.

Beispielhafte Vertropfungsverfahren sind aus der US 2004/0007789 A1, der US 5,484,559, der US 6,197,073 B1, der US 5,500,162, der US 4,043, 507 sowie der US 3, 579,721 bekannt, auf die hiermit bezüglich des Vertropfungsverfahrens vollumfänglich Bezug genommen wird. So kann beispielsweise der Schlicker in Slurry-Form durch eine Düse auf eine rotierende Platte gelenkt werden, wobei beim Aufprall dann feine homogene Tropfen gebildet werden, die dann durch eine nicht mischbare Flüssigkeit geleitet werden, um so das Wasser abzutrennen und den Grünkörper zu bilden. Alternativ kann beispielsweise auch ein Vibrationstropfungsverfahren verwendet werden, bei dem ein Slurry-Strahl durch eine perforierte, vibrierende Platte gelenkt wird, die mit einer Resonanzfrequenz des Strahls vibriert, so dass gleichmäßige Tropfen gebildet werden. Auch kann hierbei ein Gas auf die Tropfen geleitet werden. Das Vertropfungsverfahren ist jedoch erfindungsgemäß nicht besonders beschränkt.

Durch das erfindungsgemäße Verfahren zur Herstellung eines Grünkörpers wird somit ein Grünkörper hergestellt. Ein Grünkörper kann also die Pulvermischung umfassen. Zudem kann der Grünkörper zusätzlich 0 bis 1,5 Gew.%, bevorzugt 0 bis 1,0 Gew.% Bindemittel sowie 0 bis 1,5 Gew.%, bevorzugt 0 bis 1,0 Gew.% eines Hilfsstoffes umfassen. Der Grünkörper kann hierbei bevorzugt eine Grünkörperdichte zwischen 75 und 99 % der theoretischen Dichte der Werkstoffzusammensetzung, weiter bevorzugt zwischen 88 und 99 %, besonders bevorzugt zwischen 93 und 99 % und insbesondere zwischen 93 und 97% erreichen. Ein erfindungsgemäßer Grünkörper umfasst eine Pulvermischung, die durch ein Sprühtrocknungsverfahren oder ein Gefriertrocknungsverfahren oder ein Gefriergranulierungsverfahren oder ein Dispergierungsverfahren, bevorzugt in einer Rührwerkskugelmühle, aus einer Werkstoffzusammensetzung umfassend Wolframcarbid, WC, und teilstabilisiertes Zirkonoxid, $nX:ZrO_2$ hergestellt wird, bei der der Anteil an WC in der Werkstoffzusammensetzung 1 bis 60 Vol.%, und der Anteil an $nX:ZrO_2$ 99 bis 40 Vol.% beträgt, basierend auf 100 Vol.% WC und $nX:ZrO_2$, und der in Form einer Kugel mit einem Breiten- zu Längenverhältnis ($b/l_3$) zwischen 0,90 und 0,99, bevorzugt zwischen 0,93 und 0,98, weiter bevorzugt zwischen 0,93 und 0,97 vorliegt. Darüber hinaus kann die Gründichte/Dichte des Grünkörpers zwischen 90 und 99 % der theoretischen Dichte der Werkstoffmischung, bevorzugt zwischen 93 und 99%, weiter bevorzugt zwischen 93 und 97 % betragen.

Die Grünkörper können dann erfindungsgemäß in einem Verfahren in einem ersten Sinterschritt bei Temperaturen zwischen 1200 bis 1800°C, bevorzugt zwischen 1200 und 1700°C, weiter bevorzugt zwischen 1350 und 1600°C, besonders bevorzugt zwischen 1400 und 1600°C, wobei jeweils die Randwerte eingeschlossen sind, unter einer Schutzgasatmosphäre, bestehend aus Helium, Argon oder Stickstoff oder Mischungen davon, bevorzugt Stickstoff, oder unter Vakuum oder unter einer reduzierenden Atmosphäre, bevorzugt aus einem Gemisch von Argon und Wasserstoff, oder unter Gasdruck, bevorzugt Argon oder Stickstoff und unter einem Druck zwischen 0,1 und 1,5 MPa, bevorzugt zwischen 0,2 und 1,0 MPa, gegebenenfalls mit einem Sinterhilfsmittel, gesintert werden. Die Sinterung kann hierbei beispielsweise in einer Sinterzelle erfolgen. Somit kann eine erfindungsgemäße gesinterte Kugel beispielsweise durch Sintern eines erfindungsgemäßen Grünkörpers erhalten werden. Die erfindungsgemäße bei diesen Temperaturen gesinterte Kugel kann anschließend in einem zweiten Sinterschritt heiß-isostatisch nachverdichtet werden. Dieses nach dem Stand der Technik sogenannte HIP-Verfahren kann erfindungsgemäß bei Temperaturen zwischen 1200 und 1700°C, weiter bevorzugt zwischen 1300 und 1600°C, besonders bevorzugt zwischen 1400 und 1550°C erfolgen, wobei jeweils die Randwerte eingeschlossen sind, bei einem Druck, erzeugt durch eine Schutzgasatmosphäre, beispielsweise bestehend aus Argon oder Stickstoff oder Mischungen davon, bevorzugt Stickstoff, in der Höhe von bevorzugt zwischen 1500 und 3500 bar, weiter bevorzugt zwischen 2000 und 3000 bar, besonders bevorzugt zwischen 2300 und 2600 bar. Durch den zweiten Sinterschritt kann eine verbesserte Verschleißfestigkeit erzielt werden. Hierbei kann zur Bestimmung der Verschleißfestigkeit eine horizontale Laborrührwerkskugelmühle mit folgenden Parametern verwendet werden:

Mahlraum: SiC
Rührer: Polyethylen (PE)
Füllgrad: 55 Vol%
Drehzahl: 3821 U/min ($\triangleq$ 10 m/s)
Mahlmedium: Wasser
Testdauer / Zyklen: 9 h, 24 h, 36 h, 48 h

Die Ergebnisse werden dann als Massendifferenz vor und nach der Verschleißmessung bestimmt sowie als Massenverlust pro Zeit (%/h).

Eine erfindungsgemäße gesinterte Kugel kann noch durch ein Polierverfahren, beispielsweise in Wasser und/oder durch Zusatz eines Poliertripels wie z.B. Siliziumcarbid Schleifkorn und/oder Aluminiumoxid Schleifkorn und/oder eines oberflächenaktiven Hilfsstoffs, z.B. eines Tensids, nachbearbeitet werden, wie es üblicherweise für z.B. Mahlkugeln durchgeführt wird. Bei der Herstellung von mehreren gesinterten Kugeln bzw. beim Vorhandensein einer größeren Menge von gesinterten Kugeln können auch Kugeln mit verschiedenen Größen in demselben Verfahren mit der gleichen Ausgangswerkstoffzusammensetzung erhalten werden, so dass solche Kugeln dann durch ein Sortierverfahren im Anschluss nach deren Größe sortiert werden können, beispielsweise mittels eines Siebs oder eines Sichters oder eines Hydrozyklons.

Beispiele:

Die Erfindung wird nun beispielhaft anhand von beispielhaften Ausführungsformen im Detail beschrieben, ist jedoch nicht auf diese beschränkt.

Beispiel 1:

Mit 5,6 Gew.% $Y_2O_3$ teilstabilisiertes $ZrO_2$ wurde mit WC mit einem Volumenverhältnis von 80:20 gemischt. Zu dieser Mischung wurde ein Dispergierhilfsmittel (Dolapix CE 64 bzw. Dolapix A88 der Firma Zschimmer & Schwarz GmbH & Co KG) in verschiedenen Mengen von 0,2 bis 1,5 Gew.% gegeben, wobei sich ein Anteil von 1,0 Gew.% als optimal erwies.

Zu einer solchen Mischung wurde entionisiertes Wasser in einem Gewichtsverhältnis Feststoff zu Wasser von 68:32 gegeben, um eine geeignete Mischung bezüglich der Viskosität zu erhalten.

Zudem wurde Ammoniumalginat (NH4-Alginat) als Binder in einer Menge von 0,4 bis 1,4 Gew.% gegeben, wobei sich hierbei eine Menge von 1,2 Gew.% Binder als optimal erwies.

Eine Messung der Viskosität mittels eines Rheometers nach DIN 53019-1 des so erhaltenen Schlickers ergab einen Wert von max. 2500mPas.

Aus dem Schlicker wurden dann mittels eines Vertropfungsverfahrens über Düsen und/oder Kanülen formstabil Grünkörper der Größen 0,3 bis 2,5 mm durch Eintauchen sowie Reaktion in einer Calcium- oder Aluminium-Laktat- oder eine anorganische Säure- oder eine organische SäureLösung erhalten.

Diese wurden im Anschluss zu erfindungsgemäßen gesinterten Kugeln durch ein Sinterverfahren geformt. Die Sinterung erfolgte unter Vakuum und/oder unter einer Stickstoff-Atmosphäre bei Normaldruck. Die Sintertemperatur lag zwischen 1350 und 1550°C, wobei sich hierbei eine Temperatur von 1550°C als optimal erwies. Die so gesinterten Kugeln wurden anschließend heiß-isostatisch nachverdichtet, wobei die Temperatur zwischen 1400 und 1600°C lag, hierbei sich eine Temperatur von 1500°C als optimal erwies. Der Druck, erzeugt durch eine Stickstoffgas-Atmosphäre lag zwischen 2000 und 3000 bar, wobei sich ein Druck von 2500 bar als optimal erwies.

Die Verschleißfestigkeit der Kugeln wurde jeweils nach dem ersten Sinterschritt zwischen 1350 und 1550°C und nach dem isostatischen Nachverdichten, dem zweiten Sinterschritt, bestimmt. Als Mühle wurde eine WAB (Willy A. Bachofen, Schweiz) Typ Researchlab verwendet.
Es wurden die folgenden Parameter verwendet:

Mahlraum: SiC
Rührer: Polyethylen (PE)
Füllgrad: 55 Vol%
Drehzahl: 3821 U/min ($\triangleq$ 10 m/s)
Mahlmedium: Wasser
Testdauer / Zyklen: 9 h

Die Ergebnisse werden dann als Massendifferenz vor und nach der Verschleißmessung bestimmt sowie als Massenverlust pro Zeit (%/h).

Nach dem ersten Sintern ergab sich ein Verschleiß von 0,87%/h (bei einer Testdauer von 9h).

Bei Kugeln nach dem zweiten Sintern ergab sich ein Verschleiß von 0,07%/h (Testdauer 9h), also eine Verbesserung um einen Faktor ~12.

Bei diesen stark verbesserten Verschleißwerten wurden die Tests mit den isostatisch nachverdichteten Kugeln auf 48h verlängert. Es ergab sich für die im Vergleich zu herkömmlichen Mahlkugeln schweren Kugeln ein Verschleiß von 0,18%/h.

Beispielhaft nach diesem Verfahren gebildete gesinterte Kugeln sind in Figuren 1 bis 3 gezeigt, die lichtmikroskopische Aufnahmen von gesinterten Kugeln zeigen.

Für gesinterte Kugeln wurde zudem eine Analyse mittel Retsch Camsizer® hinsichtlich des Wertes des Breiten- zu Längenverhältnis (b/$l_3$) gemacht.

Als Partikelanzahl wurde 500470 mit der CCD-B und 48847 mit der CCD-Z ermittelt.

Die Werte der Messung sind in nachfolgender Tabelle 1 angegeben, wobei die Werte P3 und Q3 die Fraktion und die kumulative Verteilung, bezogen auf das Volumen, angeben (http://www.horiba.com/fileadmin/uploads/Scientific/Documents/PSA/Manuals/CAMSIZER_Charac teristics_Nov2009.pdf).

Tabelle 1: Messwerte von beispielhaften gesinterten Kugeln

| Kornklasse [mm] | P3 [%] | Q3 [%] | b/13 |
|---|---|---|---|
| 0.000 - 0.100 | 0.00 | 0.00 | 0.824 |
| 0.100 - 0.150 | 0.00 | 0.00 | 0.780 |
| 0.150 - 0.200 | 0.01 | 0.01 | 0.926 |
| 0.200 - 0.250 | 0.05 | 0.06 | 0.946 |
| 0.250 - 0.300 | 0.19 | 0.25 | 0.951 |
| 0.300 - 0.350 | 9.29 | 9.54 | 0.955 |
| 0.350 - 0.400 | 54.13 | 63.67 | 0.959 |
| 0.400 - 0.450 | 15.65 | 79.32 | 0.949 |
| 0.450 - 0.500 | 14.94 | 94.26 | 0.940 |
| 0.500 - 0.550 | 5.05 | 99.31 | 0.926 |
| 0.550 - 0.600 | 0.67 | 99.98 | 0.920 |
| 0.600 - 0.650 | 0.00 | 99.98 | |
| 0.650 - 0.700 | 0.01 | 99.99 | |
| 0.700 - 0.750 | 0.00 | 99.99 | |
| 0.750 - 0.800 | 0.00 | 99.99 | |
| > 0.800 | 0.01 | 100.00 | 0.921 |

Für die gesinterten Kugeln wurde ein Wert b/$l_3$ von 0,952 ermittelt und als Kenngrößen wurden für Q3 [%] für 10,0, 50,0 und 90,0 x-Werte [mm] von 0,351, 0,386 und 0,486 ermittelt.

Beispiel 2:

Die erhaltenen Dichten der gesinterten Kugeln werden mit den theoretisch möglichen Dichten für Mischungen von mit Yttriumoxid teilstabilisiertem Zirkonoxid mit Wolframcarbid verglichen. Die theoretisch erreichbaren Dichten sind in Tabelle 2 angegeben und können nach folgender Formel berechnet werden:

$$\frac{Vol.\%(\text{WC}) \cdot \rho(\text{WC})^{\#}}{100} + \frac{Vol.\%(\text{ZrO}_2) \cdot \rho(\text{ZrO}_2)^{\#}}{100}$$

$$\#: \text{Dichte in g/cm}^3$$

Tabelle 2: Theoretische erreichbare Dichten

| Rohstoff | Reindichte [g/cm$^3$] | Mischverhältnis 90/10 | Mischverhältnis 80/20 | Mischverhältnis 70/30 | Mischverhältnis 60/40 |
|---|---|---|---|---|---|
| 3Y-TZP | 6,07 | 7,03 | 7,98 | 8,94 | 9,89 |
| WC | 15,63 | | | | |
| 3Y-TZP = 5,6 Gew.% Y$_2$O$_3$ zu 94 Gew.% ZrO$_2$ + 0,2 Gew.% SiO2 + 0,2 Gew.% (Al2O3 + CaO + TiO2) | | | | | |

Es zeigte sich, dass die Dichten der gesinterten Kugeln zwischen 80 und 99% der theoretisch erreichbaren Dichten lagen.

Die erfindungsgemäßen gesinterten Kugeln zeichnen sich durch eine erhöhte Dichte gegenüber bisher bekannten gesinterten Kugeln aus und eignen sich dadurch beispielsweise hervorragend als Mahlkörper. Gleichzeitig zeigen die auf der Erfindung basierenden Mahlkörper eine hohe Verschleißfestigkeit und damit Haltbarkeit.

## Patentansprüche

1. Gesinterte Kugel, umfassend Wolframcarbid, WC, und teilstabilisiertes Zirkonoxid, nX:ZrO$_2$, bei der der Anteil an WC in der Werkstoffzusammensetzung 1 bis 60 Vol.%, und der Anteil an nX:ZrO$_2$ 99 bis 40 Vol.% beträgt, basierend auf 100 Vol.% WC und nX:ZrO$_2$.

2. Gesinterte Kugel gemäß Anspruch 1, wobei das Wolframcarbid mit mindestens einem organischen Additiv, bevorzugt Stearinsäure, passiviert wurde.

3. Gesinterte Kugel gemäß Anspruch 1 oder 2, bei der das Zirkonoxid mit einem Metalloxid X ausgewählt aus Seltenerdoxiden, Calciumoxid und Magnesiumoxid teilstabilisiert ist.

4. Gesinterte Kugel gemäß einem der Ansprüche 1 bis 3, bei der der Gewichtsanteil an X in nX:ZrO$_2$, berechnet aus dem Molanteil n mit Hilfe der molaren Masse der jeweiligen Verbindung, 2 bis 25,0 Gew.% beträgt, basierend auf 100 Gew.% nX:ZrO$_2$.

5. Gesinterte Kugel gemäß einem der Ansprüche 1 bis 4, bei der das Zirkonoxid mit weiteren Elementen M vermischt ist.

6. Gesinterte Kugel gemäß Anspruch 5, bei der der Gehalt an weiteren Elementen M 0 bis 2 Gew.%, basierend auf 100 Gew.% nX:ZrO$_2$.

7. Gesinterte Kugel gemäß einem der Ansprüche 1 bis 6, welche mit einem Sinterhilfsmittel versetzt ist.

8. Gesinterte Kugel gemäß einem der Ansprüche 1 bis 7, welche einen Durchmesser von 0,05 mm bis 3 mm aufweist.

9. Grünkörper umfassend eine Pulvermischung, die durch ein Sprühtrocknungsverfahren oder ein Gefriertrocknungsverfahren oder ein Gefriergranulierungsverfahren oder ein Dispergierungsverfahren, bevorzugt in einer Rührwerkskugelmühle, aus einer Werkstoffzusammensetzung umfassend Wolframcarbid, WC, und teilstabilisiertes Zirkonoxid, nX:ZrO$_2$ hergestellt wird, bei der der Anteil an WC in der Werkstoffzusammensetzung 1 bis 60 Vol.%, und der Anteil an nX:ZrO$_2$ 99 bis 40 Vol.% beträgt, basierend auf 100 Vol.% WC und nX:ZrO$_2$, und der in Form einer Kugel mit einem Breiten- zu Längenverhältnis (b/l$_3$) zwischen 0,90 und 0,99, bevorzugt zwischen 0,93 und 0,98 vorliegt.

10. Verfahren zur Herstellung eines Grünkörpers nach Anspruch 9, bei dem die Pulvermischung mit entionisiertem Wasser bis zum Erreichen eines Feststoffgehalts zwischen 40 bis 80 Gew.% und mit 0 bis 1,5 Gew.% Bindemittel und 0 bis 1,5 Gew.% eines Hilfsstoffes gemischt wird und anschließend über ein Vertropfungsverfahren zu einem Grünkörper verarbeitet wird.

11. Verfahren zur Herstellung einer gesinterten Kugel gemäß einem der Ansprüche 1 bis 8, bei dem ein Grünkörper gemäß Anspruch 9 bei Temperaturen zwischen 1200 bis 1800°C unter einer Schutzgasatmosphäre, bestehend aus Helium, Argon oder Stickstoff oder Mischungen davon, oder unter Vakuum oder unter einer reduzierenden Atmosphäre, oder unter Gasdruck, und unter einem Druck zwischen 0,1 und 1,5 MPa, und gegebenenfalls mit einem Sinterhilfsmittel, gesintert wird.

12. Verfahren gemäß Anspruch 11, wobei die gesinterte Kugel in einem zweiten Sinterschritt heiß-isostatisch bei Temperaturen zwischen 1200 und 1700°C und bei einem Druck, erzeugt durch eine Schutzgasatmosphäre, von zwischen 150 und 350 MPa (1500 und 3500 bar) nachverdichtet wird.

**Claims**

1. Sintered ball, comprising tungsten carbide WC and partially stabilised zirconium oxide $nX:ZrO_2$, in which the proportion of WC in the material composition is 1 to 60 % by volume and the proportion of $nX:ZrO_2$ is 99 to 40 % by volume based on 100 % by volume WC and $nX:ZrO_2$.

2. Sintered ball according to claim 1, wherein the tungsten carbide has been passivated using at least one organic additive, preferably stearic acid.

3. Sintered ball according to either claim 1 or claim 2, in which the zirconium oxide is partially stabilised using a metal oxide X selected from rare earth oxides, calcium oxide and magnesium oxide.

4. Sintered ball according to any of claims 1 to 3, in which the proportion by weight of X in $nX:ZrO_2$, calculated from the molar proportion by using the molar mass of the compound in question, is 2 to 25.0 % by weight based on 100 % by weight $nX:ZrO_2$.

5. Sintered ball according to any of claims 1 to 4, in which the zirconium oxide is mixed with further elements M.

6. Sintered ball according to claim 5, in which the content of further elements M is 0 to 2 % by weight based on 100 % by weight $nX:ZrO_2$.

7. Sintered ball according to any of claims 1 to 6, to which a sintering additive is added.

8. Sintered ball according to any of claims 1 to 7, which has a diameter of 0.05 mm to 3 mm.

9. Green body comprising a powder mixture which is produced by a spray-drying method or a freeze-drying method or a freeze-granulation method or a dispersion method, preferably in an agitated bead mill, from a material composition comprising tungsten carbide WC and partially stabilised zirconium oxide $nX:ZrO_2$, in which the proportion of WC in the material composition is 1 to 60 % by volume and the proportion of $nX:ZrO_2$ is 99 to 40 % by volume based on 100 % by volume WC and $nX:ZrO_2$, said green body being in the form of a ball having a width-to-length ratio $(b/l_3)$ of between 0.90 and 0.99, preferably between 0.93 and 0.98.

10. Method for producing a green body according to claim 9, in which the powder mixture is mixed with deionised water, until a solid content of between 40 and 80 % by weight is achieved, and with 0 to 1.5 % by weight binding agent and 0 to 1.5 % by weight of an additive and subsequently process to form a green body by a drop-forming method.

11. Method for producing a sintered ball according to any of claims 1 to 8, in which a green body according to claim 9 is sintered at temperatures of between 1200 and 1800 °C in a protective atmosphere, consisting of helium, argon or nitrogen or mixtures thereof, or in a vacuum or a reducing atmosphere, or under gas pressure, and at a pressure of between 0.1 and 1.5 MPa and optionally with a sintering additive.

12. Method according to claim 11, wherein the sintered ball is subsequently pressed hot-isostatically at temperatures of between 1200 and 1700 °C and at a pressure, produced by a protective atmosphere, of between 150 and 350 MPa (1500 and 3500 bar).

**Revendications**

1. Sphère frittée, comprenant du carbure de tungstène, WC, et un oxyde de zirconium partiellement stabilisé, nX : $ZrO_2$, dans laquelle la proportion en WC dans la composition du matériau est de 1 à 60 % en volume et la proportion

en nX : ZrO$_2$ est de 99 à 40 % en volume, sur la base de 100 % en volume de WC et de nX : ZrO$_2$.

2. Sphère frittée selon la revendication 1, dans laquelle le carbure de tungstène a été passivé avec au moins un additif organique, de préférence de l'acide stéarique.

3. Sphère frittée selon la revendication 1 ou 2, dans laquelle l'oxyde de zirconium est partiellement stabilisé avec un oxyde de métal X choisi parmi les oxydes de terres rares, l'oxyde de calcium et l'oxyde de magnésium.

4. Sphère frittée selon l'une des revendications 1 à 3, dans laquelle la proportion en poids en X dans nX : ZrO$_2$, calculée à partir de la proportion molaire n à l'aide de la masse molaire du composé considéré, est de 2 à 25,0 % en poids, sur la base de 100 % en poids de nX : ZrO$_2$.

5. Sphère frittée selon l'une des revendications 1 à 4, dans laquelle l'oxyde de zirconium est mélangé avec d'autres éléments M.

6. Sphère frittée selon la revendication 5, dans laquelle la teneur en autres éléments M est de 0 à 2 % en poids sur la base de 100 % en poids de nX : ZrO$_2$.

7. Sphère frittée selon l'une des revendications 1 à 6, laquelle est additionnée d'un agent d'aide au frittage.

8. Sphère frittée selon l'une des revendications 1 à 7, laquelle présente un diamètre de 0,05 mm à 3 mm.

9. Corps brut comprenant un mélange de poudres, qui est fabriqué par un procédé de séchage par pulvérisation, ou un procédé de séchage par congélation, ou un procédé de granulation par congélation, ou un procédé de dispersion, de préférence dans un broyeur agitateur à billes, à base d'une composition du matériau comprenant du carbure de tungstène, WC, et d'oxyde de zirconium partiellement stabilisé, nX : ZrO$_2$, dans lequel la proportion en WC dans la composition du matériau est de 1 à 60 % en volume et la proportion en nX : ZrO$_2$ est de 99 à 40 % en volume, sur la base de 100 % en volume de WC et de nX : ZrO$_2$, et qui se présente sous la forme d'une sphère avec un rapport largeur sur longueur (b/l3) entre 0,90 et 0,99, de préférence, entre 0,93 et 0,98.

10. Procédé de fabrication d'un corps brut selon la revendication 9, dans lequel le mélange de poudres est mélangé avec de l'eau déionisée jusqu'à l'obtention d'une teneur en matière solide entre 40 et 80 % en poids et est mélangé avec de 0 à 1,5 % en poids de liant et avec 0 à 1,5 % en poids d'un produit auxiliaire, et est ensuite façonné en un corps de base par le biais d'un procédé d'égouttage.

11. Procédé de fabrication d'une sphère frittée selon l'une des revendications 1 à 8, dans lequel un corps brut selon la revendication 9 est fritté à des températures entre 1 200 et 1 800 °C sous une atmosphère de gaz protecteur, constitué d'hélium, d'argon ou d'azote, ou de mélanges de ceux-ci, ou sous vide ou sous atmosphère réduite, ou sous une pression de gaz, et sous une pression entre 0,1 et 1,5 MPa, et éventuellement avec un agent d'aide au frittage.

12. Procédé selon la revendication 11, où la sphère frittée est rendue plus dense dans une seconde étape de frittage isostatique à chaud à des températures entre 1 200 et 1 700 °C et pour une pression, générée par une atmosphère de gaz protecteur entre 150 et 350 MPa (1 500 à 3 500 Bar).

Figur 1

Figur2

Figur 3

100 µm

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011113854 A1
- US 20040007789 A1
- US 5484559 A
- US 6197073 B1
- US 5500162 A
- US 4043 A
- US 507 A
- US 3579721 A


**In der Beschreibung aufgeführte Nicht-Patentliteratur**

- **HUSSAINOVA et al.** Erosive wear of advanced composited based on WC. *Tribology International,* 2011, vol. 46 (1), 254-260
- **JIANG et al.** ZrO''2-WC nanocomposites with superior properties. *Journal of the European Ceramic Society,* 2006, vol. 27 (2-3), 1247-1251
- **ANNE G. et al.** Hard, tough and strong ZrO2-WC composites from nanosized powders. *Journal of the European Ceramic Society,* 2005, vol. 25 (1), 55-63
- **D. JIANG et al.** ZrO2-WC nanocomposites with superior properties. *J Eur. Cer. Soc.,* 2007, vol. 27, 1247-1251